# EUROPÄISCHE PATENTSCHRIFT

(11) **EP 2 135 801 B1**
(45) Veröffentlichungstag und Bekanntmachung des Hinweises auf die Patenterteilung: **11.05.2016**
(21) Anmeldenummer: 09401008.9
(22) Anmeldetag: 12.06.2009
(51) Int. Cl.: B62H 3/00, E04H 12/22

(54) **Haltesystem für Zweiräder**
Support for bicycles
Support pour bicyclettes

(30) Priorität: 17.06.2008 DE 202008000072 U
(43) Veröffentlichungstag der Anmeldung: 23.12.2009
(73) Patentinhaber: Morgenstern, Marc, 23689 Techau (DE)
(72) Erfinder: Morgenstern, Marc, 23689 Techau (DE)
(74) Vertreter: Hansen, Jochen

(56) Entgegenhaltungen:
- CN-Y- 2 739 066
- FR-A1- 2 766 784
- GB-A- 2 314 860
- GB-A- 2 428 224
- US-A- 5 553 715
- US-A- 5 983 685
- US-A1- 2007 017 881

## Beschreibung

Die Erfindung betrifft ein Haltesystem für Zweiräder, insbesondere Fahrräder, mit einer Haltevorrichtung zur Halterung des Zweirades/der Zweiräder und mit einem Boden, wobei die Haltevorrichtung einen Fußbereich zur Aufstellung auf dem Boden in einer Aussparung hat.

Derartige Haltesysteme sind im Stand der Technik in unterschiedlicher Ausgestaltung bekannt. Aus der DE 299 09 120 U1 ist eine Zweiradparker-Reihenanlage für Zweiräder mit nebeneinander montierten Einzel- oder Doppelparkern bekannt, bei der eine Anzahl von Einzel- oder Doppelparkern im vorgegebenen Abstand auf einer gemeinsamen auf oder im Untergrund montierbaren, langgestreckten niedrigen Bodenhalterung angeordnet sind und zusammen ein Reihenanlagemodul bilden.

Dabei ist nach einem ersten Ausführungsbeispiel die auf dem Untergrund montierbare, langgestreckte Bodenhalterung ein Metallprofil, das auf dem Boden, beispielsweise auf einer geschlossenen, gepflasterten Fläche mit Bodenankern befestigt ist. Nachteilig an dieser Ausgestaltung ist, dass die als Metallprofil ausgebildete Bodenhalterung, die funktionsgemäß dem Fußbereich des Anmeldungsgegenstandes entspricht, als Hindernis auf dem Boden aufliegt und somit eine Stolperfalle sowie Laub- und Schmutzfang bildet.

Alternativ wird in der DE 299 09 120 U1 auch ein Ausführungsbeispiel mit einer im Untergrund angeordneten Bodenhalterung beschrieben. Dabei ist die als Metallprofil ausgebildete Bodenhalterung tiefer im Untergrund, beispielsweise auf einem versenkten Fundament oder dergleichen befestigt und die eigentlichen Haltevorrichtungen für das Zweirad sind über vertikal anordnete Distanzstücke mit der Bodenhalterung verbunden. Beim anschließenden Pflastern der Verkehrsfläche am Zweiradparker müssen diese aus dem Boden herausschauenden Distanzstücke passgenau "umpflastert" werden. Dies ist ein erheblicher manueller Arbeitsaufwand, womit diese Ausführung deutliche Kostennachteile hat. Nach Fertigstellung der Pflasterfläche ist jedoch ein glatter Bodenbereich realisiert. Da somit auch eine zweimalige Anfahrt für die Montage des Zweiradparkers erforderlich ist, nämlich einmal zur Montage der im Untergrund angeordneten Bodenhalterung mit Distanzelementen und anschließend zur Montage der Fahrradhalter nach Fertigstellung der Pflasterung mit den zeitaufwendigen Anpassungen im Bereich der Distanzstücke, ergeben sich jedoch deutliche Kostennachteile.

Ferner sind Fahrradhaltesysteme bekannt, bei denen auf zwei parallel zueinander angeordneten Schienen, beispielsweise ausgebildet als umgekehrtes U-Profil und/oder als Winkelprofil, die beiden Schienen verbindende Bügel zum Halten eines Rades des Zweirades und/oder zum Anlehnen eines Zweirades befestigt. Dabei können mehrere derartige Bügelanordnungen in vorgegebenen Abständen nebeneinander, ggf. abwechselnd in tiefer und angehobener Position alternativ als Parksituation von beiden Seiten oder als einseitige Ausgestaltung ausgebildet sein. Bei all diesen Fahrradhaltesystemen werden die parallelen Schienen, ggf. auch als langgestreckte Rechteckrahmenkonstruktion einfach auf der fertigen Verkehrsfläche aufgeschraubt. Entsprechend bleibt die Konstruktion oberhalb der Verkehrsfläche sichtbar und vorragend, womit sie eine Unfallgefahr und einen unerwünschten Schmutzfang bilden.

Aus der US 2007/0017881 A1 ist ein Motorradständer bekannt, der mit einer beispielsweise auf einer Ladefläche angeordneten Steckfassung auf dieser eingesteckt beziehungsweise abgenommen werden kann.

Der nächstliegende bekanntgewordene Stand der Technik ist den Dokument US2007/017881 zu entnehmen.

Die US 5,983,685 zeigt eine in Beton eingebettete Metallbox, in der eine herausklappbare Diebstahlsicherung für Motorräder verborgen ist. Alternativ wird eine in Beton fixierte Stange angegeben, an der eine Befestigungsplatte angesetzt ist.

Die CN 2739066Y zeigt einen Fahrradständer mit einem als Schiene ausgebildeten Fußbereich. Dies ähnelt beispielsweise dem Fahrradständer gemäß DE 299 09 120 U1.

Die US 5,553,715 zeigt eine Aussparung im Boden, in die ein Element um eine erste Schwenkachse ein- und ausklappbar ist, das als Fahrradständer und zur Sicherung des Fahrrades dient.

Aufgabe der Erfindung ist es daher, ein Haltesystem für Zweiräder ausgehend vom eingangs genannten Stand der Technik anzugeben, bei dem die Halteeinrichtung bei geringem Montageaufwand zwar nach Fertigstellung der Verkehrsfläche, insbesondere der Pflasterung montiert werden kann, jedoch gleichwohl das Oberflächenniveau nicht durch vom Untergrund vorstehenden Elementen beeinträchtigt wird.

Gelöst wird diese Aufgabe mit einem Haltesystem nach Ansprüche 1 und 3. Weitere vorteilhafte Ausgestaltungen und Weiterbildungen der Erfindung gehen aus den Unteransprüchen hervor.

Dadurch, dass wenigstens eine der Haltevorrichtung zugeordnete Bodenplatte als Bestandteil des Bodens vorgesehen ist, wobei die Bodenplatte in ihrer Oberseite wenigstens eine Aussparung zur versenkten Aufnahme des Fußbereichs aufweist, ist es möglich, die Pflasterarbeiten für eine Verkehrsfläche, auf der auch Zweiradhaltesysteme befestigt werden sollen, ganzflächig durchzuarbeiten, wobei lediglich an den vorzusehenden Stellen für das gewünschte Zweiradhaltesystem in der Pflasterung die entsprechend zugeordneten Bodenplatten eingelegt werden. Die Bodenplatten weisen dabei entsprechend zugeordnete Aussparungen auf, in die dann die Haltevorrichtung mit ihrem Fußbereich eingreifen. Der Fußbereich wird dabei in der Aussparung versenkt, so dass keine Stolperstellen neben den Halteelementen für das Fahrrad aus der Bodenoberfläche hervorragen.

Wenn der Fußbereich als Schiene ausgebildet ist, kann der Fußbereich technisch einfach und somit kostengünstig erstellt werden. Zudem lassen sich an langgestreckten Elementen Reihenanordnungen zum Abstellen von Zweirädern platzsparend montieren. Bei bevorzugt geradlinigen Schienen ist das System an rechtwinklig geplanten Verkehrsflächen leicht einzuplanen und aufzubauen.

Zur weiteren Vereinfachung der Haltevorrichtung und zur Kostenersparnis ist die Schiene aus einer Winkelschiene, einem T-Profil, einem, insbesondere umgekehrten, U-Profil oder einem Vierkant- oder Rundrohr gebildet. Eine Winkelschiene oder ein T-Profil erreicht eine relativ hohe Steifigkeit und lässt sich zur erfindungsgemäßen versenkten Aufnahme in der Bodenplatte in kleinräumige Aussparungen aufnehmen. Bei einer Ausgestaltung mit umgekehrtem U-Profil, Rundrohr oder Vierkantrohr ist die nach oben gerichtete Sichtseite des erfindungsgemäßen Fußbereichs geschlossen ausgebildet, was sowohl hinsichtlich der Unfallgefahr, der Anfälligkeit auf anhaftenden Verschmutzungen und dem optischen Eindruck positiv zu werten ist.

Dadurch, dass die Aussparung in der Bodenplatte ein Falz an einem oberen Rand der Bodenplatte ist, ist die Aussparung an die jeweilig verwendete Schienenform für den Fußbereich angepasst. Wenn der Falz einen Querschnitt mit einer nach außen leicht geneigten Fläche hat, können leichte Maßungenauigkeiten, Abweichungen vom rechten Winkel sowie leichte Verwerfungen des Profils in Längsrichtung beim Einbau in den Falz ausgeglichen werden. Zudem wird zwischen der Winkelschiene und dem Falz der Bodenplatte eindringende Feuchtigkeit nach außen zur Drainage in den Untergrund geleitet, womit Frostschäden vermieden werden.

Wenn die Aussparung in der Bodenplatte eine Nut in der Oberseite der Bodenplatte ist, wobei die Nut einen Nutboden und zwei Nutflanken hat, ist eine ideale Einpassung der Aussparung an U-Profil und Vierkantrohrschienen gegeben. Die Tiefe der Nut entspricht der Höhe des U-Profils bzw. Vierkantrohrs.

Dadurch, dass im Nutboden an wenigstens einer Nutflanke angrenzend ein Absatz vorgesehen ist, wobei zwischen dem Absatz und der gegenüberliegenden Nutflanke oder dem zweiten Absatz eine vertiefte Entwässerungsrille im Nutboden ausgebildet ist, wird vermieden, dass das umgekehrte U-Profil oder Vierkantprofil im Oberflächenwasser steht, da wenigstens eine Flanke des U-Profils auf dem Absatz oberhalb der Entwässerungsrille aufsteht. Insbesondere im Winter auf Verkehrsflächen, die auch mit aggressiven Taumitteln behandelt werden, wird somit Korrosionsbefall an den Profilen weitgehend vermieden. Besonders bevorzugt enthält die Entwässerungsrille neben etwaigen Befestigungsbohrungen auch Entwässerungsbohrungen, damit das in die Nut eindringende Oberflächenwasser möglichst rasch in den Boden unter der Bodenplatte abfließen kann.

Alternativ kann der Nutboden zwischen den Nutflanken zur Horizontalen einseitig geneigt oder im Querschnitt V-förmig ausgebildet sein.

Bevorzugt hat die Nut einen Querschnitt mit sich vom Nutboden der Nut zur Oberseite der Bodenplatte leicht aufweitenden Seitenflanken. Damit wird erreicht, dass bei leicht aufgeweitetem umgekehrten U-Profil und/oder bei Verwindungen im U-Profil oder Vierkantrohrprofil ein Einsetzen der Haltevorrichtung mit seinem Fußbereich in die als Nut ausgebildete Aussparung erleichtert wird. Ferner ist von Vorteil, dass etwaige in der Nut stehende Feuchtigkeit beim Gefrieren nach oben gedrängt wird, ohne dass dabei Frostschäden entstehen können. Ergänzend kann in der Bodenplatte im Boden der Nut Entwässerungsbohrungen zur Ableitung von Oberflächenwasser vorgesehen sein.

Eine hohe Standfestigkeit des Haltesystems wird dadurch erreicht, dass der Fußbereich mit der Bodenplatte verbunden, insbesondere verschraubt ist. Bei einer Verschraubung kann für eine Wartung oder Reparatur die Haltevorrichtung jederzeit von der Bodenplatte getrennt werden. Die Verschraubung kann beispielsweise durch im Boden der Nut senkrecht eingebrachte Bohrungen in der Bodenplatte mit darin einsetzbare Dübel und entsprechend angepassten Schraubbolzen realisiert werden. Die Bohrungen können in einem standardisierten Raster, beispielsweise alle 10 cm in der Bodenplatte vorgesehen werden, so dass eine angepasste rasterförmige Befestigung möglich ist, ohne dass auf der Baustelle Bohrungen in der Bodenplatte durchgeführt werden müssen.

Wenn die Haltevorrichtung Aufnahmeelemente für wenigstens ein Rad des Zweirades und/oder Anstellelemente zum Anlehnen des Zweirades hat, wird das zu haltende Fahrrad in einer im Wesentlichen aufrechten Stellung sicher fixiert. Um eine Parkanordnung für mehrere Fahrräder zu erhalten, sind viele Aufnahmeelemente oder Anstellelemente in Reihe nebeneinander angeordnet.

Bevorzugt sind zwei parallel angeordnete Schienen vorgesehen, zwischen denen bügelförmige Aufnahmelemente und/oder Anstellelemente befestigt sind. Die bügelförmigen Aufnahmeelemente können entweder ein Rad des Zweirades zwischen einem Doppelbügel aufnehmen oder in Form eines höheren größeren Bügels als Anlehnmöglichkeit für das Zweirad dienen.

Insbesondere für eine Reihenanordnung sind mehrere Bodenplatten in Reihe nebeneinanderliegend so angeordnet, dass durchgehende Aussparungen in den mehreren Bodenplatten zur Aufnahme der Haltevorrichtung gebildet sind. Durch eine rasterartige und symmetrische Anordnung der Aussparungen können die aneinanderliegenden Bodenplatten bei beispielsweise einer quadratischen Größe von 50 x 50 cm problemlos verlegt werden.

Um bei nicht über die volle Länge belegten Aussparungen in den Bodenplatten eine mögliche Stolperfalle zu vermeiden, ist ein Füllelement vorgesehen, das einen für den Fußbereich nicht benötigten, freien Abschnitt der Aussparung der Bodenplatte verfüllt.

Nachfolgend werden zwei Ausführungsbeispiele der Erfindung anhand der beiliegenden Zeichnungen detailliert beschrieben.

Darin zeigt:
- Fig. 1: in einer räumlichen Ansicht ein Haltesystem für Zweiräder in einer ersten Ausführungsform,
- Fig. 2: in räumlicher Ansicht eine Bodenplatte, wie sie für die Ausführungsform gemäß Fig. 1 bevorzugt ist,
- Fig. 3: in räumlicher Ansicht ein Haltesystem in einer zweiten Ausführungsform,
- Fig. 4: eine Bodenplatte, wie sie für das Haltesystem gemäß Fig. 3 bevorzugt ist,
- Fig. 5: ein Haltesystem in einer abgewandelten Ausführungsform gemäß Fig. 3 in räumlicher Ansicht,
- Fig. 6: eine Bodenplatte in einer weiteren Ausführungsform in einem Anschnitt und
- Fig. 7: eine Bodenplatte in einer alternativen Ausführungsform zu Fig. 6.

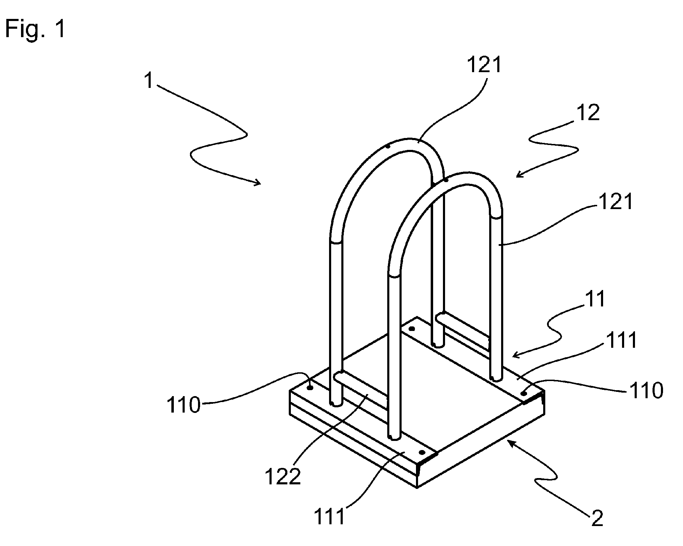

In Fig. 1 ist in räumlicher Ansicht ein Haltesystem in einer ersten Ausführungsform dargestellt. Das Haltesystem für Zweiräder, insbesondere Fahrräder, weist eine Haltevorrichtung 1 bestehend aus einem Aufnahmeelement 12 und einem Fußbereich 11 auf. Das Aufnahmeelement 12 besteht aus zwei U-förmigen Bügeln 121, die mittels Distanzelementen 122 parallel beabstandet zueinander gehalten sind, um ein Rad eines Fahrrades aufnehmen zu können. Die U-förmigen Bügel 121 sind umgekehrt orientiert, also mit ihren freien Enden mit dem Fußbereich 11 verbunden.

Der Fußbereich 11 besteht aus zwei parallel zueinander angeordneten Winkelschienen 111, wobei die beiden U-förmigen Bügel 121 des Aufnahmeelementes 12 zwischen den beiden Winkelschienen 111 diese verbindend befestigt sind.

Bevorzugt besteht das Aufnahmeelement 12, nämlich die U-förmigen Bügel 121 und die Distanzelemente 122 aus miteinander verschweißten Stahlrohren und der Fußbereich 11 aus zwei Stahlwinkelschienen 111, auf denen die Enden der U-förmigen Bügel 121 in entsprechender Orientierung aufgeschweißt sind. Die gesamte Haltevorrichtung 1 aus Stahl ist bevorzugt verzinkt ausgebildet. Ferner sind Schraubenlöcher 110 in der horizonalen Flanke der Winkelschienen 111 zur Befestigung der Haltevorrichtung 1 auf einer Bodenplatte 2 vorgesehen.

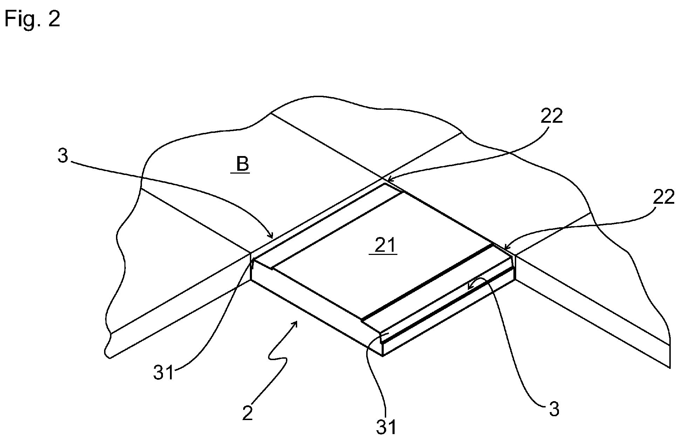

Die Bodenplatte 2 ist in räumlicher Ansicht in Fig. 2 dargestellt. Zur Veranschaulichung der Einbausituation ist die an das Haltesystem angrenzende Verkehrsfläche als Boden B, in diesem Fall aus einem Plattenbelag dargestellt. Die Bodenplatte 2 ist Bestandteil des Bodens B. Im dargestellten Ausführungsbeispiel ist die Bodenplatte 2 ein quadratisches Plattenelement, beispielsweise der Größe 50 x 50 cm und der übrige Boden mit gleichartigen, unprofilierten Platten der Größe 50 x 50 cm ausgelegt. Der Boden kann ebenso aus anderen Pflastermaterialen gebildet werden. Ebenso ist es denkbar, dass die Bodenplatte 2 andere Abmessungen, beispielsweise auch eine rechteckige Grundfläche aufweist.

Die Bodenplatte 2 weist eine Oberseite 21 auf, die in gleicher horizontaler Höhlenlage wie der angrenzende Boden B zu verlegen ist. An zwei gegenüberliegenden oberen Rändern 22 weist die Bodenplatte 2 Aussparungen 3 auf, die im ersten Ausführungsbeispiel als Falz 31 ausgebildet sind. Der Falz 31 weist an den beiden gegenüberliegenden oberen Rändern 22 jeweils einen in der Materialstärke der darauf aufzubringenden Winkelschiene 111 zzgl. Toleranzmaß ausgebildeten Falzabschnitt mit einer leicht geneigten Fläche 311 sowie einen Falzabschnitt im Bereich des zugeordeten Plattenrandes auf, der ebenfalls leicht geneigt in diesem Fall zur Vertikalen ausgebildet ist.

Bei Verlegung dieser Bodenplatte 2 im Verbund mit rechteckigen normalen Bodenplatten oder anderen Pflastersteinen, bleibt die Aussparung 3 in Form eines L-förmigen Falzes 31 frei, so dass die beiden parallel entsprechend der gemäß Fig. 1 angeordneten Winkelschienen 111 so in die Aussparungen 3 einpassen, dass die Schienen bzw. der Fußbereich 11 der Haltevorrichtung 1 im Boden B bündig mit seiner Oberfläche, also bündig auch zur Oberseite 21 der Bodenplatte 2 versenkt angeordnet sind. Erfindungsgemäß entstehen somit keine Stolper- und/oder Schmutzfallen.

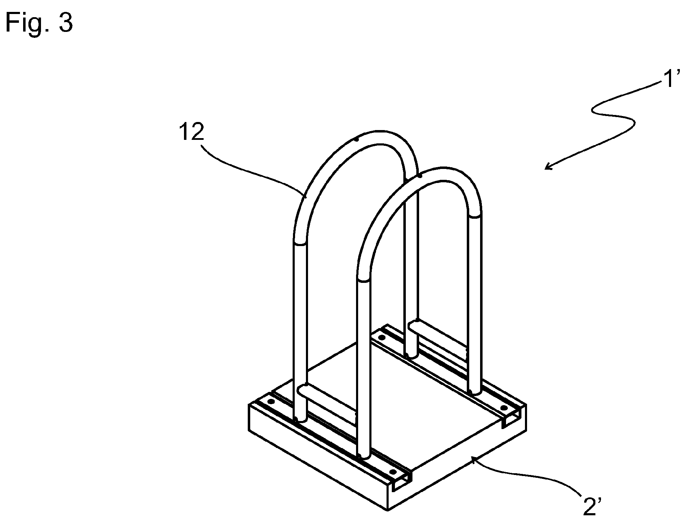

In einer zweiten Ausführungsform ist das Haltesystem in räumlicher Ansicht in Fig. 3 dargestellt. Funktionsgleiche Bauteile sind mit gleichen Bezugszeichen versehen.

Das Haltesystem gemäß zweiter Ausführungsform besteht ebenfalls aus einer Haltevorrichtung 1', die wiederum ein Aufnahmeelement 12 entsprechend der ersten Ausführungsform aufweist. Alternativ kann die Haltevorrichtung 1' auch ein hier nicht dargestelltes Anstellelement aufweisen, das beispielsweise als Poller, größerer Bügel oder dergleichen ausgebildet ist, um ein Fahrrad oder mehrere Fahrräder daran anlehnen zu können.

Ferner weist die Haltevorrichtung 1' einen Fußbereich 11 auf, der im hier dargestellten zweiten Ausführungsbeispiel aus zwei in umgekehrter Orientierung angeordneten U-Profilen 112 besteht, die wiederum parallel zueinander angeordnet sind. Die U-Profile 112 weisen ebenfalls Schraubenlöcher 110 zur Befestigung der Haltevorrichtung 1' auf einer zugeordneten Bodenplatte 2' auf.

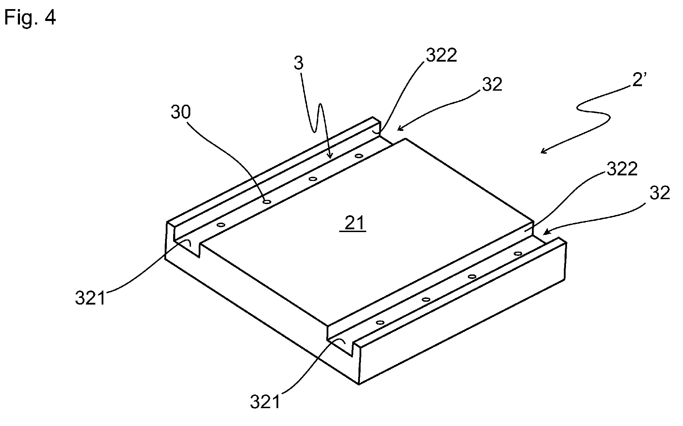

Gemäß Fig. 4 weist die Bodenplatte 2' zwei zu den U-Profilen 112 korrespondierende Aussparungen 3 in Form von Nuten 32 auf. In der Nut 32 sind im Nutboden 321 Bohrungen 30 zur Aufnahme von Befestigungsdübeln und/oder zur Entwässerung der Nut 32 vorgesehen. Die Seitenflanken 322 der Nut 32 sind so zur Vertikalen leicht geneigt ausgebildet, dass die Nut 32 sich zur Oberseite 21 der Bodenplatte 2' leicht aufweitet.

Die Tiefe der Nut 32 ist so auf das U-Profil 112 des Fußbereichs 11 abgestimmt, dass beim Einsetzen der Haltevorrichtung 1' in die beiden Nuten 32 der Bodenplatte 2' die Oberkante des U-Profils 112 mit der Oberseite 21 der Bodenplatte 2' in einer horizontalen Ebene zusammenfällt. Damit werden wiederum Stolper- und Schmutzfallen vermieden.

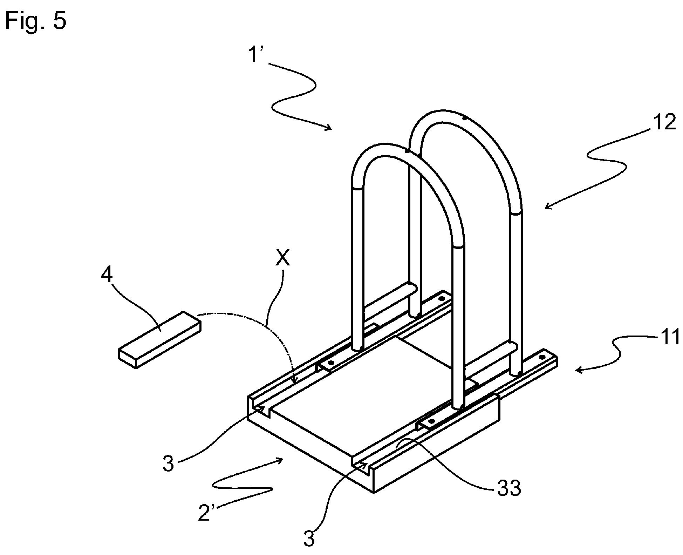

In weiterer Ausgestaltung des zweiten Ausführungsbeispiels ist das Haltesystem in einer räumlichen Ansicht in Fig. 5 dargestellt, bei der ein Teil der als Nut 32 ausgebildeten Aussparung 3 nicht von dem als U-Profil 112 ausgebildeten Fußbereich 11 der Haltevorrichtung 1' belegt ist. Beispielsweise könnte die Haltevorrichtung 1' aus zwei parallel angeordneten langen U-Profilen 112 bestehen, die eine Vielzahl von Aufnahmeelementen 12 oder nicht dargestellten Anstellelementen in Reihenanordnung aufweisen, wobei die zugeordneten Bodenplatten 2' mit ihren Nuten 32 in durchgehend fluchtender Anordnung verlegt sind.

An den Enden derartiger Anordnungen könnte dann eine Situation mit einem freien Abschnitt 33 wie in Fig. 5 dargestellt entstehen. Um hier eine Stolper- und/oder Schmutzfalle durch den freien Abschnitt 33 der Aussparung 3 zu vermeiden, ist ein Füllelement 4 vorgesehen, das genau dem freien Abschnitt 33 angepasst ist bzw. auf seine Größe abgelängt wird. Zur Verdeutlichung ist in Fig. 5 das Füllelement 4 neben dem Haltesystem angeordnet. Der strichpunktierte Pfeil X deutet den Einbau des Füllelementes 4 im freien Abschnitt 33 der Aussparung 3 an. Das Füllelement 4 kann in geeigneter Weise durch Kleben, Zementieren, Schrauben oder dergleichen in dem freien Abschnitt 33 fixiert werden.

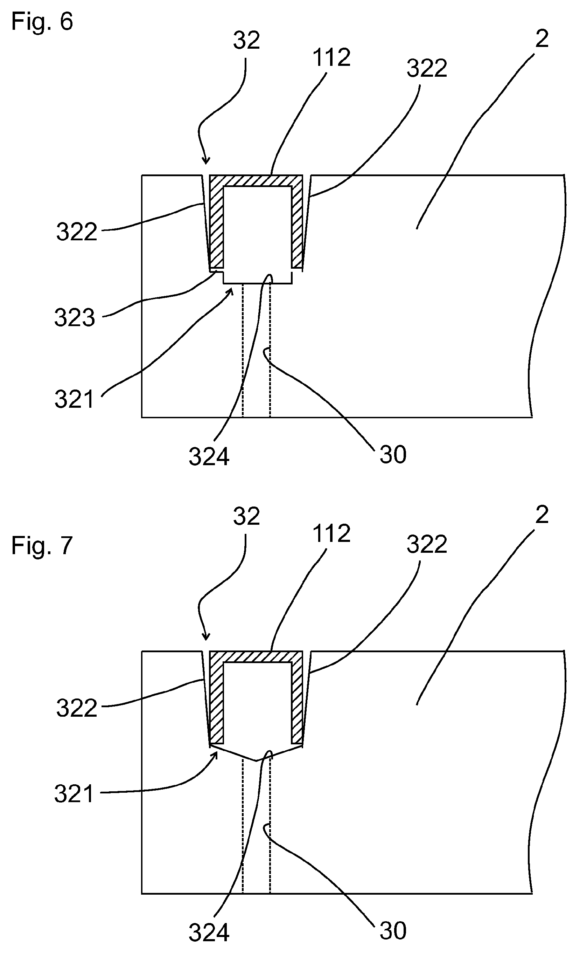

In Fig. 6 ist im Querschnitt eine Bodenplatte 2 angeschnitten dargestellt, wobei der Querschnitt senkrecht zur Längserstreckung der Nut 32 über den Bereich einer Nut dargestellt ist. Die in der Bodenplatte 2 vorgesehene Nut 32 hat wiederum zur Vertikalen leicht geneigt ausgebildete Seitenflanken 322, so dass die Nut 32 sich zur Oberseite 21 der Bodenplatte 2 leicht aufweitend ausgebildet ist. Entsprechend wird vermieden, dass in der Nut 32 stehendes Oberflächenwasser bei Frostgraden die Bodenplatte bzw. das in der Nut aufgenommene Profil beschädigt. Bei Gefrieren wird das Oberflächenwasser aufgrund der leicht geneigten Seitenflanken 322 nach oben druckentlastend ausgepresst. In Erweiterung zu den Ausführungsbeispielen der Fig. 3 bis 5 ist der Nutboden 321 der Nut 32 abgestuft ausgebildet. Parallel zu den Seitenflanken 322 ist beidseitig ein Absatz 323 vorgesehen, auf dem die bevorzugt als umgekehrtes U-Profil 112 ausgebildete Schiene der Radhaltevorrichtung aufsteht. Das Maß zwischen Absatz 323 und Bodenplattenoberkante ist auf die Höhe des U-Profils 112 so abgestimmt, dass ein in die Nut 32 eingesetztes Profil planeben mit der Oberseite der Bodenplatte abschließt und somit keine Stolperfalle bildet.

Zwischen den beiden Absätzen 323, 323 ist im Nutboden 321 eine Entwässerungsrille 324 ausgebildet. Die Entwässerungsrille 324 erlaubt ein Sammeln von Oberflächenwasser in der Nut 32, ohne dass dabei das U-Profil 112 in dem Oberflächenwasser steht. Bevorzugt sind im Bereich der Entwässerungsrille 324 mehrere Entwässerungsbohrungen 30 vorgesehen, um das in der Entwässerungsrille 324 aufgefangene Oberflächenwasser möglichst rasch zum unter der Bodenplatte 2 befindlichen Boden durchzuleiten.

In Fig. 7 ist eine alternative Ausführung der Nut 32 dargestellt. Der Nutboden 321 ist im Querschnitt V-förmig ausgebildet. Die Mitte des V-förmigen Nutbodens 321 bildet in diesem Ausführungsbeispiel die Entwässerungsrille 324.

Mit diesen Ausgestaltungen der Nut 32 gemäß Fig. 6 oder 7 wird erreicht, dass bei Oberflächenwasserbeaufschlagung, insbesondere in Verbindung mit Tausalzen und dergleichen ein längerer Kontakt des aggressiven Oberflächenwassers mit dem meist aus verzinktem Stahl gebildeten U-Profil vermieden wird. Entsprechend wird die Standzeit der Haltesysteme auch bei aggressiven Bestandteilen in Oberflächenwässern deutlich verbessert.

### Bezugszeichenliste

- 1,1': Haltevorrichtung
- 11: Fußbereich, Schiene
- 110: Schraubenloch
- 111: Winkelschiene
- 112: U-Profil
- 12: Aufnahmelement
- 121: U-förmiger Bügel
- 122: Distanzelement
- 2,2': Bodenplatte
- 21: Oberseite
- 22: oberer Rand
- 3: Aussparung
- 30: Bohrung
- 31: Falz
- 311: leicht geneigte Fläche
- 32: Nut
- 321: Nutboden
- 322: Seitenflanke
- 323: Absatz
- 324: Entwässerungsrille
- 33: freier Abschnitt
- 4: Füllelement

- B: Boden
- X: Pfeil

## Patentansprüche

1. Haltesystem für Zweiräder, insbesondere Fahrräder, mit einer Haltevorrichtung (1, 1') zur Halterung des Zweirades/der Zweiräder und mit einem Boden (B), wobei die Haltevorrichtung (1, 1') einen Fußbereich (11) zur Aufstellung auf dem Boden (B) in einer Aussparung (3) hat, **dadurch gekennzeichnet, dass** der Boden (B) aus einem Platten- oder Pflasterbelag besteht, der Fußbereich (11) als Schiene ausgebildet ist und wenigstens eine der Haltevorrichtung (1) zugeordnete Bodenplatte (2, 2') als Bestandteil des Bodens (B) aus dem Platten- oder Pflasterbelag vorgesehen ist, wobei die Bodenplatte (2, 2') in ihrer Oberseite (21) die Aussparung (3) zur versenkten Aufnahme der Schiene (11) aufweist und die Schiene (11) der Haltevorrichtung (1) im Boden (B) bündig mit seiner Oberfläche, also bündig auch zur Oberseite (21) der Bodenplatte (2) versenkt angeordnet ist, wobei die Aussparung (3) in der Bodenplatte (2) ein Falz (31) an einem oberen Rand (22) der Bodenplatte (2) ist.

2. Haltesystem nach Anspruch 1, **dadurch gekennzeichnet, dass** der Falz (31) einen Querschnitt mit einer nach außen leicht geneigten Fläche (311) hat.

3. Haltesystem für Zweiräder, insbesondere Fahrräder, mit einer Haltevorrichtung (1, 1') zur Halterung des Zweirades/der Zweiräder, wobei die Haltevorrichtung (1, 1') einen Fußbereich (11) zur Aufstellung auf einem Boden (B) aus einem Platten- oder Pflasterbelag hat, **dadurch gekennzeichnet, dass** der Fußbereich (11) als Schiene ausgebildet ist und wenigstens eine der Haltevorrichtung (1) zugeordnete Bodenplatte (2, 2') als Bestandteil des Bodens (B) aus einem Platten- oder Pflasterbelag vorgesehen ist, wobei die Bodenplatte (2, 2') in ihrer Oberseite (21) die Aussparung (3) zur versenkten Aufnahme der Schiene (11) aufweist und die Schiene (11) der Haltevorrichtung (1) im Boden (B) bündig mit seiner Oberfläche, also bündig auch zur Oberseite (21) der Bodenplatte (2) versenkt angeordnet ist, wobei die Aussparung (3) in der Bodenplatte (2) eine Nut (32) in der Oberseite der Bodenplatte ist.

4. Haltesystem nach Anspruch 3, **dadurch gekennzeichnet, dass** die Nut (32) einen Nutboden (321) und zwei Nutflanken (322) hat.

5. Haltesystem nach Anspruch 4, **dadurch gekennzeichnet, dass** im Nutboden (321) an wenigstens einer Nutflanke angrenzend ein Absatz (323) vorgesehen ist, wobei zwischen dem Absatz (323) und der gegenüberliegenden Nutfläche oder dem zweiten Absatz eine vertiefte Entwässerungsrille (324) im Nutboden (321) ausgebildet ist.

6. Haltesystem nach Anspruch 4, **dadurch gekennzeichnet, dass** der Nutboden (321) zwischen den Nutflanken (322) zur Horizontalen einseitig geneigt oder im Querschnitt V-förmig ausgebildet ist.

7. Haltesystem nach Anspruch 4, 5 oder 6, **dadurch gekennzeichnet, dass** die Nut (32) einen Querschnitt mit sich vom Nutboden (321) der Nut (32) zur Oberseite (21) der Bodenplatte (2') leicht aufweitenden Seitenflanken (322) hat.

8. Haltesystem nach einem der vorangehenden Ansprüche, **dadurch gekennzeichnet, dass** die Schiene (11) aus einer Winkelschiene (111), einem T-Profil, einem, insbesondere umgekehrten, U-Profil (112) oder einem Vierkant- oder Rundrohr gebildet ist.

9. Haltesystem nach einem der vorangehenden Ansprüche, **dadurch gekennzeichnet, dass** der Fußbereich (11) mit der Bodenplatte (2) verbunden, insbesondere verschraubt ist.

10. Haltesystem nach einem der vorangehenden Ansprüche, **dadurch gekennzeichnet, dass** in der Bodenplatte (2) im Bereich der Aussparung (3) Bohrungen (30) für die Befestigung der Haltevorrichtung (1) und/oder zur Entwässerung der Aussparung (3) vorgesehen sind.

11. Haltesystem nach Anspruch 10 und 6, **dadurch gekennzeichnet, dass** die Bohrungen (30) im Bereich der Entwässerungsrille (324) angeordnet sind.

12. Haltesystem nach einem der vorangehenden Ansprüche, **dadurch gekennzeichnet, dass** die Haltevorrichtung (1) Aufnahmeelemente (12) für wenigstens ein Rad des Zweirades und/oder Anstellelemente zum Anlehnen des Zweirades hat.

13. Haltesystem nach Anspruch 10, **dadurch gekennzeichnet, dass** mehrere Bodenplatten (2) in Reihe nebeneinanderliegend so angeordnet sind, dass durchgehende Aussparungen (3) in den mehreren Bodenplatten (2) zur Aufnahme der Haltevorrichtung (1) gebildet sind.

14. Haltesystem nach einem der vorangehenden Ansprüche, **dadurch gekennzeichnet, dass** ein Füllelement (4) vorgesehen ist, das einen für den Fußbereich (11) nicht benötigten, freien Abschnitt (33) der Aussparung (3) der Bodenplatte (2) verfüllt.

## Claims

1. A holding system for two-wheelers, in particular bicycles, having a holding device (1, 1') for supporting the two-wheeler/two-wheelers and having an area of ground (B), wherein the holding device (1,1') has a base region (11) for placing on the ground (B) in a recess (3), **characterized in that** the ground (B) is composed of flagging or block pavement, the base region (11) is in the form of a rail and at least one base plate (2, 2') associated with the holding device (1) is provided as a component of the ground (B) of flagging or block pavement, wherein in its upper side (21) the base plate (2, 2') has the recess (3) for sunk-in receiving of the rail (11) and the rail (11) of the holding device (1) is arranged sunk-in in the ground (B) so as to be flush with its upper surface, therefore also flush with the upper side (21) of the base plate (2), wherein the recess (3) in the base plate (2) is a rabbet (31) at an upper edge (22) of the base plate (2).

2. A holding system according to claim 1, **characterized in that** the rabbet (31) has a cross-section with a surface (311) inclined slightly outwards.

3. A holding system for two-wheelers, in particular bicycles, having a holding device (1, 1') for supporting the two-wheeler/two-wheelers, wherein the holding device (1, 1') has a base region (11) for placing on an area of ground (B) of flagging or block pavement, **characterized in that** the base region (11) is in the form of a rail and at least one base plate (2, 2') associated with the holding device (1) is provided as a component of the ground (B) of flagging or block pavement, wherein in its upper side (21) the base plate (2, 2') has the recess (3) for sunk-in receiving of the rail (11) and the rail (11) of the holding device (1) is arranged sunk-in in the ground (B) so as to be flush with its upper surface, therefore also flush with the upper side (21) of the base plate (2), wherein the recess (3) in the base plate (2) is a groove (32) in the upper side of the base plate.

4. A holding system according to claim 3, **characterized in that** the groove (32) has a groove base (321) and two groove flanks (322).

5. A holding system according to claim 4, **characterized in that** a shoulder (323) is provided in the groove base (321) and is adjacent to at least one groove flank, wherein between the shoulder (323) and the facing groove surface or the second shoulder there is a recessed drainage channel (324) in the groove base (321).

6. A holding system according to claim 4, **characterized in that** between the groove flanks (322), the groove base (321) is inclined to the horizontal at one side or is V-shaped in cross-section.

7. A holding system according to claim 4, 5 or 6, **characterized in that** the groove (32) has a cross-section with side flanks (322) flaring slightly from the groove base (321) of the groove (32) to the upper side (21) of the base plate (2').

8. A holding system according to any one of the preceding claims, **characterized in that** the rail (11) is formed from an angle rail (111), a T-section, an, in particular inverted, U-section (112) or a square or circular pipe.

9. A holding system according to any one of the preceding claims, **characterized in that** the base region (11) is connected to the base plate (2), in particular screwed.

10. A holding system according to any one of the preceding claims, **characterized in that** bores (30) for securing the holding device (1) and/or for drainage of the recess (3) are provided in the base plate (2), in the region of the recess (3).

11. A holding system according to claim 10 and 6, **characterized in that** the bores (30) are arranged in the region of the drainage channel (324).

12. A holding system according to any one of the preceding claims, **characterized in that** the holding device (1) has receiving elements (12) for at least one wheel of the two-wheeler and/or placement elements for leaning the two-wheeler.

13. A holding system according to claim 10, **characterized in that** a plurality of base plates (2) are arranged side by side in a row in such a manner that continuous recesses (3) are formed in the plurality of base plates (2) to receive the holding device (1).

14. A holding system according to any one of the preceding claims, **characterized in that** a filling element (4) is provided which fills a free portion (33), not required for the base region (11), of the recess (3) of the base plate (2).

## Revendications

1. Système support pour deux-roues, notamment pour bicyclettes, avec un dispositif support (1, 1') pour maintenir le deux-roues/la bicyclette et avec une base (B), le dispositif support (1, 1') étant muni d'une zone de pied (11) pour le positionnement sur la base (B) dans un évidement (3), **caractérisé en ce que** la base (B) est formée d'un dallage ou d'un pavage, la zone de pied (11) est conçue sous la forme d'un rail et au moins une plaque de base (2, 2') associée au dispositif support (1) est prévue comme constituant de la base (B) formée de dallage ou de pavage, la plaque de base (2, 2') étant munie dans sa face supérieure (21) de l'évidement (3) pour la réception encastrée du rail (11), et le rail (11) du dispositif support (1) étant disposé de façon encastrée dans la base (B) en affleurant sa surface supérieure, c'est-à-dire en affleurant également la surface supérieure (21) de la plaque de base (2), l'évidement (3) dans la plaque de base (2) étant une feuillure (31) sur un bord supérieur (22) de la plaque de base (2).

2. Système support selon la revendication 1, **caractérisé en ce que** la feuillure (31) a une section transversale avec une surface (311) légèrement inclinée vers l'extérieur.

3. Système support pour deux-roues, notamment pour bicyclettes, avec un dispositif support (1, 1') pour maintenir le deux-roues/la bicyclette, le dispositif support (1, 1') étant muni d'une zone de pied (11) pour le positionnement sur une base (B) formée d'un dallage ou d'un pavage, **caractérisé en ce que** la zone de pied (11) est conçue sous la forme d'un rail et au moins une plaque de base (2, 2') associée au dispositif support (1) est prévue comme constituant de la base (B) formée d'un dallage ou d'un pavage, la plaque de base (2, 2') étant munie dans sa face supérieure (21) de l'évidement (3) pour la réception encastrée du rail (11), et le rail (11) du dispositif support (1) étant disposé de façon encastrée dans la base (B) en affleurant sa surface supérieure, c'est-à-dire en affleurant également la surface supérieure (21) de la plaque de base (2), l'évidement (3) dans la plaque de base (2) étant une rainure (32) dans la surface supérieure de la plaque de base.

4. Système support selon la revendication 3, **caractérisé en ce que** la rainure (32) a un fond de rainure (321) et deux flancs de rainure (322).

5. Système support selon la revendication 4, **caractérisé en ce qu'**un épaulement (323) est prévu dans le fond de rainure (321) à proximité d'au moins un flanc de rainure, une rigole de drainage en creux (324) étant formée dans le fond de rainure (321), entre l'épaulement (323) et la surface de rainure opposée ou le deuxième épaulement.

6. Système support selon la revendication 4, **caractérisé en ce que** le fond de rainure (321), entre les flancs de rainure (322), est incliné d'un côté par rapport à l'horizontale ou est conçu avec une section transversale en forme de V.

7. Système support selon la revendication 4, 5 ou 6, **caractérisé en ce que** la rainure (32) présente une section transversale avec des flancs latéraux (322) qui divergent légèrement depuis le fond de rainure (321) de la rainure (32) jusqu'à la surface supérieure (21) de la plaque de base (2').

8. Système de retenue selon l'une des revendications précédentes, **caractérisé en ce que** le rail (11) est constitué d'un fer en L (111), d'un profilé en T, d'un profilé en U, notamment d'un profilé en U inversé, (112) ou d'un tube carré ou rond.

9. Système de retenue selon l'une des revendications précédentes, **caractérisé en ce que** la zone de pieds (11) est reliée, notamment vissée, à la plaque de base (2).

10. Système de retenue selon l'une des revendications précédentes, **caractérisé en ce que** des trous (30) sont prévus dans la plaque de base (2), au niveau de l'évidement (3), pour la fixation du dispositif support (1) et/ou pour le drainage de l'évidement (3).

11. Système de retenue selon les revendications 10 et 6, **caractérisé en ce que** les trous (30) sont disposés dans la zone de la rigole de drainage (324)

12. Système de retenue selon l'une des revendications précédentes, **caractérisé en ce que** le dispositif support (1) présente des éléments de réception (12) pour au moins une roue du deux-roues et/ou des éléments de soutient pour appuyer le deux-roues.

13. Système de retenue selon la revendication 10, **caractérisé en ce que** plusieurs plaques de base (2) sont disposées en ligne les unes à côté des autres de telle sorte que des évidements continus (3) soient formés dans la pluralité de plaques de base (2) pour recevoir le dispositif support (1).

14. Système de retenue selon l'une des revendications précédentes, **caractérisé en ce qu'**il est prévu un élément de remplissage (4) qui remplit une section libre (33) de l'évidement (3) de la plaque de base (2) qui n'est pas nécessaire pour la zone de pieds (11)
